# EUROPEAN PATENT SPECIFICATION

(11) **EP 2 272 726 B1**
(45) Date of publication and mention of the grant of the patent: **19.08.2015**
(21) Application number: 09165201.6
(22) Date of filing: 10.07.2009
(51) Int. Cl.: B60R 21/237, B60R 21/233

(54) **An air-bag for a motor vehicle**
Airbag für ein Kraftfahrzeug
Airbag pour véhicule à moteur

(43) Date of publication of application: 12.01.2011
(73) Proprietor: Autoliv Development AB, 447 83 Vårgårda (SE)
(72) Inventor: Niewodniczanski, Mikolaj, Wroclaw 50-306 (PL); Driver, Sophie, Guildford, Surrey GU1 1DN (GB)
(74) Representative: Beattie, Alex Thomas Stewart

(56) References cited:
- EP-A- 1 283 136
- FR-A- 2 824 029
- JP-A- 10 035 381
- JP-A- 2001 138 848
- US-A- 5 482 318
- ANONYMOUS: "Air bag folding method" RESEARCH DISCLOSURE, MASON PUBLICATIONS, HAMPSHIRE, GB, vol. 413, no. 63, 1 September 1998 (1998-09-01), XP007123278 ISSN: 0374-4353

## Description

### Description of Invention

THE PRESENT INVENTION relates to an air-bag for a motor vehicle, and more particularly relates to an inflatable air-bag of the type suitable to be inflated directly in front of the occupant of a vehicle during a head-on collision.

Occupant protection arrangements for motor vehicles which comprise an inflatable air-bag are well-known, and are intended to reduce injury to an occupant of a motor vehicle in the event of an accident involving a crash. Air-bags of this general type are inflated on receipt of a signal indicative of a crash situation so as to inflate, thereby providing a relatively soft restraint for an occupant of the motor vehicle.

As an occupant of a motor vehicle impacts with an inflated air-bag, which is typically inflated by very highly pressurised gas, two principal forces act on the occupant. One of these forces arises from the pressure of gas within the air-bag, and the other arises from so-called "membrane forces", which result from frictional resistance to the relative movement of the warp and weft yarns of the air-bag fabric, as the fabric is subjected to tension across the front surface of the inflated air-bag.

It has been found that while the chest/sternum are of the human body is relatively resilient to these forces created in an inflating air-bag, due to the natural stiffness of the human body in this area, the head and neck region of the human body is significantly more vulnerable to injury as a result of these forces in an air-bag. It has therefore been found to be desirable to reduce the membrane forces in the region of an air-bag which is likely to be impacted by the head of a vehicle occupant so as to reduce the overall force applied to the head and neck region of the occupant, whilst providing a lower region of the air-bag with a configuration susceptible to relatively large membrane forces, the lower region of the air-bag being arranged to provide restraint to the chest/sternum region of a vehicle occupant.

Various configurations of air-bag have been suggested to reduce the membrane forces in the region of the air-bag that is likely to be impacted by the head/neck region of an occupant. For instance, air-bags of this type are disclosed in EP14390961 and WO2008099130. The air-bag configurations disclosed in these documents do, however, require relatively complex steps in the preparation of the air-bag, including the cutting and sewing of several different pieces of fabric. This increases the cost of the finished air-bag, both in terms of the raw materials required and the labour that is needed to manufacture the air-bag. A skilled person will also appreciate that a large number of sewn joints between fabric panels in an air-bag provides a large number of potential points of failure when the air-bag is inflated with very high pressure gas.

It is an object of the present invention to provide an improved air-bag of this type. Accordingly, one aspect of the present invention provides an air-bag having a surface thereof formed from a first layer of fabric, the first layer of fabric having at least one first fold arrangement formed therein, the or each first fold arrangement comprising a pair of folds of the fabric along substantially parallel first fold lines, so that the length of fabric between the first fold lines is significantly greater than the distance between the first fold lines, the first layer of fabric having at least one second fold arrangement formed therein, the or each second fold arrangement comprising a pair of is flattened and outer flaps of the airbag are folded into a variety of accordion folds. Next, the lower end of the airbag is folder inward in a plurality of accordion folders. The folds are then rotated inward through 90°. The upper end of the airbag is folded inward in a couple of S-shaped folds. These folds are not rotated inwards through 90°, and thus extend at approximately a right angle to the folds for the purpose of deploying the upper end of the airbag subsequent to the lower end.

US5482318 discloses an inflatable cushion restraint. Restraint comprises a body portion, a web portion and an entrance for admitting an inflating medium. The body portion and the web portion are joined about their perimeters by a single seam following the introduction of pleats from the perimeter of the body portion to locations in the interior thereof so as to provide material for billowing expansion during inflation.

JP 2001 138 848 describes an inflatable cushion according to the preamble of claims 1 and 9.

It is an object of the present invention to provide an improved air-bag of this type. Accordingly, one aspect of the present invention provides an air-bag according to claim 1.

Advantageously, a part of the length of fabric between each pair of first fold lines provides an upper layer of fabric, and wherein at least a part of the upper layer is connected to another region of the first layer of fabric.

Preferably, an edge of the upper layer of fabric is connected to the region of the first layer of fabric lying immediately therebelow.

Conveniently, a part of the length of fabric between the or each pair of second fold lines provides an upper layer of fabric, and wherein at least a part of the upper layer is connected to another region of the first layer of fabric.

Advantageously, an edge of the upper layer of fabric formed by the second fold arrangement is connected to the region of the first layer of fabric lying immediately therebelow.

Preferably, the or each second fold arrangement forms a pocket or cell which is at least substantially sealed at its ends.

Conveniently, the intersection of the or each first fold arrangement with the or each second fold arrangement forms an inflatable projection, side surfaces of the projection being formed primarily by regions of fabric extending between a pair of first fold lines, and end surfaces of the projection being formed primarily by regions of fabric extending between a pair of second fold lines.

Another aspect of the present invention provides an air-bag module incorporating an air-bag according to any one of the preceding claims.

A further aspect of the present invention provides a method of forming an air-bag according to claim 9.

Advantageously, the method further comprises the step of incorporating the layer of fabric to a substantially enclosed air-bag cushion.

In order that the present invention may be more readily understood, embodiments thereof will now be described, by way of example, in which:
Figure 1 shows a fabric sheet suitable for use in manufacturing an air-bag embodying the present invention.
Figure 2 shows the sheet of figure 1 with first fold arrangements formed therein;
Figures 3a and 3b show alternative side-views of the fabric sheet of figure 2;
Figure 4 shows the sheet of figure 2 with a second fold arrangement formed therein; and
Figures 5 and 6 show an air-bag embodying the present invention before and after inflation, respectively.

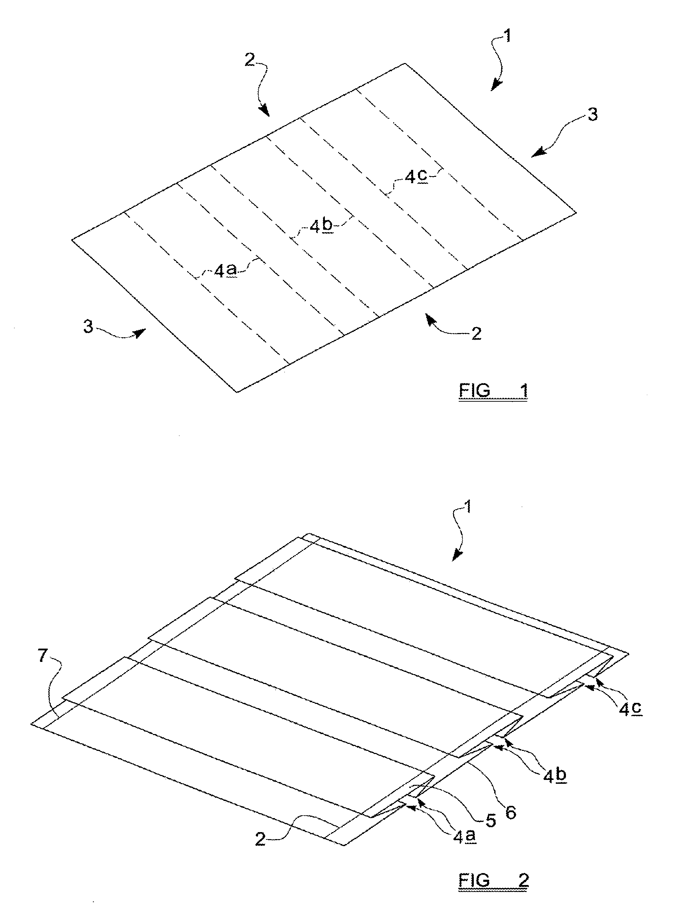

Referring firstly to figure 1, a sheet 1 of fabric, which is to form part of an air-bag embodying the present invention, is of generally rectangular shape, having a pair of opposing longer edges 2 and a pair of opposing shorter edges 3. Three pairs of first fold lines 4a, 4b, 4c are defined across the sheet 1, generally parallel with the shorter edges 3 thereof. The pairs of first fold lines 4a,4b,4c are spaced apart from one another, with (in the embodiment shown in figure 1) the spaces between adjacent pairs of fold lines 4a,4b,4c being less than the spacing between the fold lines 4a,4b,4c in each pair.

In a next stage, at each of the pairs of first fold lines 4a,4b,4c, a first fold arrangement is formed. In a preferred embodiment, the sheet 1 is folded at each of the lines 4a,4b,4c, so that the fold lines 4a,4b,4c in each pair are brought closer together, with an excess quantity of fabric extending between the fold lines 4a,4b,4c. These folds are preferably formed so that the excess quantities of fabric between each pair of fold lines 4a,4b,4c lie on the same side of the sheet 1.

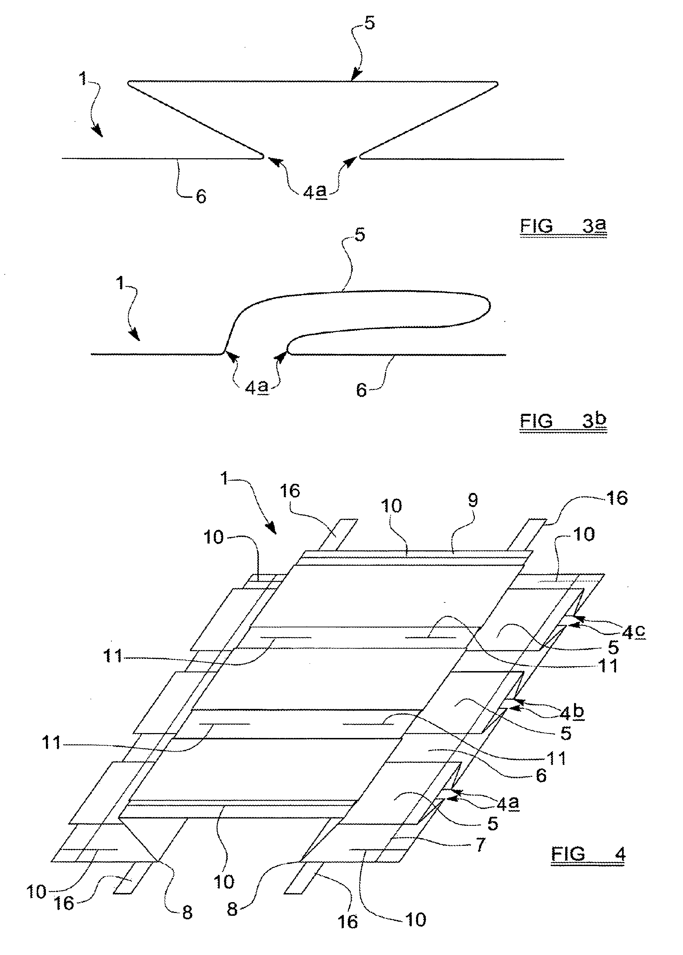

With reference to figure 3a, a schematic side-view is shown of the sheet 1 in the region of the first pair of first fold lines 4a. At each of the first fold lines 4a, the sheet 1 is folded back on itself at an acute angle, and is then folded over in the opposite direction, again at an acute angle. The result is to form a first upper layer 5 of fabric, which overlies the first fold lines 4a. It will be understood that the length of fabric extending between the first fold lines 4a is significantly greater than the distance between the fold lines 4a themselves. A fold of this type is often referred to as an "omega fold".

Returning to figure 2, it can be seen that first fold arrangements are formed at each of the pairs of first fold lines 4a,4b,4c. Once these folds have been made, at or near the longer side edges of the sheet 1 the upper layer of fabric 5 formed by each of the first fold arrangements is secured to the lower layer 6 of the sheet 1 (i.e. those parts of the sheet 1 which do not extend between any of the pairs of first fold lines 4a,4b,4c). This may be achieved using any suitable method, for instance gluing, stapling, stitching or the like. In the example shown in figure 2, a line of stitching 7 is formed near each of the longer edges 2 of the sheet 1, sewing the upper layers 5 of each of the first fold arrangements firmly in place with respect to the remainder of the sheet 1, so that the upper layers 5 formed by each fold are sewn directly to the lower layer 6. The excess fabric extending between each pair of first fold lines 4a,4b,4c therefore defines a pocket or cell which is at least substantially sealed at its ends.

It should be understood that the invention is not limited to the exact configuration of first fold arrangements shown in figures 2 and 3a. The length of fabric that extends between a pair of fold lines may adopt a different configuration, for instance as shown in figure 3b, in which the length of fabric that extends between the first pair of first fold lines 4a lies primarily to one side of the pair of fold lines 4a.

Following the formation of the first fold arrangements in the sheet 1, a pair of further fold lines 8 are formed in the sheet 1, substantially perpendicular to the first fold lines 4a,4b,4c. The second fold lines 8 are spaced apart from one another, and a second fold arrangement is formed by the sheet 1 being folded along both of the second fold lines 8 to form another fold, such as an omega fold, in which the length of fabric extending between the second fold lines 8 is significantly greater than the distance between the second fold lines 8. The second fold arrangement is substantially at right angles to the first fold arrangements, and crosses the first fold arrangements.

The second fold arrangement forms, in the manner discussed above, a top surface 9 which lies above the remainder of the sheet 1. The second fold arrangement is formed so that the top surface 9 thereof lies against the remainder of the sheet 1, and the top layer 9 is then joined to the remainder of the sheet 1, for instance by a pair of continuous lines of stitching 10, which are formed to be near the shorter edges 3 of the sheet 1. It will therefore be understood that the excess fabric extending between the pair of second fold lines 8 (which will include parts of the first fold arrangements) therefore defines a further pocket or cell, which intersects with the pockets or cells formed by the first fold arrangements, and is at least substantially sealed at its ends.

In addition, the upper layer 9 formed by the second fold arrangement is preferably connected to the lower layer 6 of the sheet 1 at locations between the upper layers 5 of the first fold arrangements, for instance by lines of stitching 11.

In an embodiment, a pair of straps or bands 16 are connected to the underside of the sheet 1 (i.e. the side opposite to that on which the excess fabric formed between the fold lines 4a,4b,4c,8 lie). The straps or bands are oriented to be substantially parallel with the second fold lines 8, and one strap or band 16 is positioned outwardly of each second fold line 8, so that one edge of the strap or band 16 lies on or just outwardly from the second fold line 8, with the width of the strap or band 16 extending away from the other second fold line 8, towards one of the longer edges 2 of the sheet. The straps or bands 16 provide a reinforcing function, and help the sheet to maintain the correct shape before, during and after inflation. The straps or bands 16 also provide an extra layer to which parts of the sheet 1 can be connected (for instance by stitching) during the manufacturing process, thus helping to reduce the risk of failure of the finished air-bag during inflation.

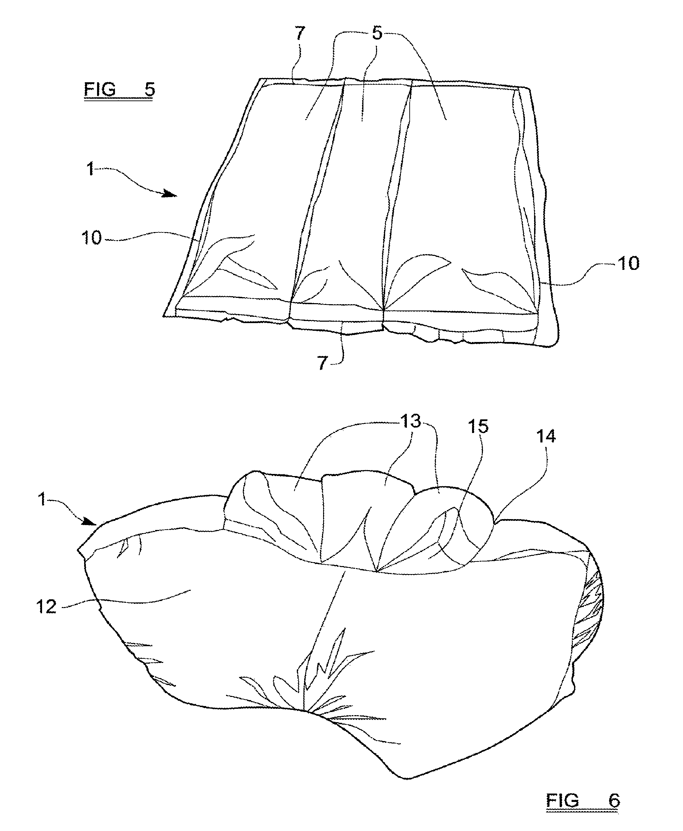

Figure 5 shows the sheet 1 after these steps have been completed.

To form a finished air-bag, the sheet 1 is connected to one or more further sheets of fabric or other material to form a substantially enclosed air-bag cushion. As is well understood in the art, the air-bag cushion will be provided with a gas inlet adapted to be connected to an inflator, so that highly pressurised gas may be introduced into an interior of the air-bag cushion to inflate the air-bag. The sheet 1 will be incorporated into the air-bag cushion so that, when the air-bag inflates, pressurised gas will be introduced to the underside of the sheet 1. As this occurs, regions formed by the intersections of the first fold arrangements and the second fold arrangements will inflate outwardly to form raised projections or ridges 13, as can be seen in figure 6, which shows an air-bag cushion 12 which incorporates a sheet similar to that described above on one of its surfaces.

It will be understood that, if the sheet 1 of fabric had been used as part of an air-bag cushion after the formation of only the first fold arrangements, the inflation of the lengths of excess fabric between the pairs of first fold lines 4a,4b,4c would have given rise to elongate inflated cells having a relatively low profile. However, the formation of the second fold arrangement allows the raised inflated projections or ridges 13 to form with a far greater depth and a more defined three-dimensional structure. In the embodiment shown in figure 6 elongate ridges 13 are formed, and it will be appreciated that side walls 14 of each of the inflated ridges 13 arise at least primarily from regions of fabric that are folded when the first fold arrangements are formed. End surfaces 15 of each of the inflated ridges 13 are formed at least primarily from regions of fabric that are folded when the second fold arrangements are formed.

It will be understood that if the head/neck region of a vehicle occupant contacts one or more of the inflated ridges 13, the membrane forces that will resist the occupant's movement will be significantly less than if the occupant contacted a plain surface of a conventional air-bag. Indeed, each of the ridges 13 may collapse entirely during an impact with the head of an occupant, or be inverted so as to protrude into the interior of the inflated air-bag cushion 12, without this motion being significantly impeded by membrane forces. The impact forces acting on the occupant's head will therefore be considerably reduced.

In the embodiment described above, three first fold arrangements are formed, and a single second fold arrangement is formed across all of the three first fold arrangements. The invention is not limited to this configuration, however. More or fewer first fold arrangements may be formed, or more than one second fold arrangement may be formed. It will be appreciated that, if two or more first fold arrangements and two or more second fold arrangements are formed, the result will be a "grid" of inflatable projections or ridges.

It will be appreciated that embodiments of the present invention provide regions of an inflatable air-bag which present significantly reduced membrane forces, and which may be formed simply, and with minimal cutting and stitching of fabric pieces/layers. The resulting air-bag cushion may therefore be formed relatively simply and cheaply, and will have a reduced number of joins/seams which might be liable to failure in deployment of the air-bag. When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention as described in the claims in diverse forms thereof.

## Claims

1. An air-bag (12) having a surface thereof formed from a first layer of fabric (1), the first layer of fabric (1) having two or more first fold arrangements formed therein, each first fold arrangement comprising a pair of folds of the fabric along substantially parallel first fold lines (4a, 4b, 4c), so that the length of fabric between the first fold lines (4a, 4b, 4c) is significantly greater than the distance between the first fold lines (4a, 4b, 4c), wherein each first fold arrangement forms a pocket or cell which is substantially sealed at its ends, the first layer of fabric (1) having at least one second fold arrangement formed therein, the or each second fold arrangement comprising a pair of folds of the fabric along substantially parallel second fold lines (8), the second fold lines (8) crossing the first fold lines (4a, 4b, 4c) and being substantially perpendicular thereto, so that the length of fabric between the second fold lines (8) is significantly greater than the distance between the second fold lines (8), **characterised in that** at the pair of first fold lines (4a, 4b, 4c) in each of the first fold arrangements, the first layer of fabric (1) is folded back on itself at an acute angle at each of the first fold lines (4a, 4b, 4c), and is then folded over in the opposite direction, again at an acute angle, wherein the result is to form a first upper layer (5) of fabric which overlies the pair of first fold lines (4a, 4b, 4c), thus forming an omega fold.

2. An air-bag (12) according to claim 1, wherein a part of the length of fabric between each pair of first fold lines (4a, 4b, 4c) provides an upper layer of fabric (5), and wherein at least a part of the upper layer (5) is connected to another region of the first layer of fabric (1).

3. An air-bag (12) according to claim 2, wherein an edge of the upper layer of fabric (5) is connected to the region of the first layer of fabric (1) lying immediately therebelow.

4. An air-bag (12) according to any preceding claim, wherein a part of the length of fabric between the or each pair of second fold lines (8) provides an upper layer of fabric (9), and wherein at least a part of the upper layer (9) is connected to another region of the first layer of fabric (1).

5. An air-bag (12) according to claim 4 wherein, an edge of the upper layer of fabric (9) formed by the second fold arrangement is connected to the region of the first layer of fabric (1) lying immediately therebelow.

6. An air-bag (12) according to any preceding claim, wherein the or each second fold arrangement forms a pocket or cell which is at least substantially sealed at its ends.

7. An air-bag (12) according to any preceding claim wherein the intersection of each first fold arrangement with the or each second fold arrangement forms an inflatable projection, side surfaces of the projection being formed primarily by regions of fabric extending between a pair of first fold lines (4a, 4b, 4c), and end surfaces of the projection being formed primarily by regions of fabric extending between a pair of second fold lines (8).

8. An air-bag module incorporating an air-bag (12) according to any one of the preceding claims.

9. A method of forming an air-bag (12) comprising the steps of:
forming two or more first fold arrangements in a layer of fabric (1), each first fold arrangement comprising a pair of folds of the fabric along substantially parallel first fold lines (4a, 4b, 4c), so that the length of fabric between the first fold lines (4a, 4b, 4c) is significantly greater than the distance between the first fold lines (4a, 4b, 4c), wherein each first fold arrangement forms a pocket or cell which is substantially sealed at its ends;
forming at least one second fold arrangement in the layer (1), the or each second fold arrangement comprising a pair of folds of the fabric along substantially parallel second fold lines (8), the second fold lines (8) crossing the first fold lines (4a, 4b, 4c) and being substantially perpendicular thereto, so that the length of fabric between the second fold lines (8) is significantly greater than the distance between the second fold lines (8),
**characterized in that** at the pair of first fold lines (4a, 4b, 4c) in each of the first fold arrangements, the first layer of fabric (1) is folded back on itself at an acute angle at each of the first fold lines (4a, 4b, 4c), and is then folded over in the opposite direction, again at an acute angle, wherein the result is to form a first upper layer (5) of fabric which overlies the pair of first fold lines (4a, 4b, 4c), thus forming an omega fold.

10. A method according to claim 9, further comprising the step of incorporating the layer of fabric (1) to a substantially enclosed air-bag cushion (12).

## Patentansprüche

1. Airbag (12), wobei eine Fläche davon aus einer ersten Stoffschicht (1) geformt ist, wobei die erste Stoffschicht (1) zwei oder mehr darin ausgebildete erste Faltanordnungen aufweist, wobei jede erste Faltanordnung ein Paar Falten des Stoffs entlang von im Wesentlichen parallelen ersten Faltlinien (4a, 4b, 4c) umfasst, sodass die Stofflänge zwischen den ersten Faltlinien (4a, 4b, 4c) deutlich länger ist als der Abstand zwischen den ersten Faltlinien (4a, 4b, 4c), wobei jede erste Faltanordnung eine Tasche oder Kammer bildet, die an ihren Enden im Wesentlichen verschlossen ist, wobei die erste Stoffschicht (1) mindestens eine darin ausgebildete zweite Faltanordnung aufweist, wobei die oder jede zweite Faltanordnung ein Paar Falten des Stoffs entlang von im Wesentlichen parallelen zweiten Faltlinien (8) umfasst, wobei die zweiten Faltlinien (8) quer über die ersten Faltlinien (4a, 4b, 4c) und im Wesentlichen senkrecht dazu verlaufen, sodass die Stofflänge zwischen den zweiten Faltlinien (8) deutlich länger ist als der Abstand zwischen den zweiten Faltlinien (8), **dadurch gekennzeichnet, dass** an dem Paar erster Faltlinien (4a, 4b, 4c) in jeder der ersten Faltanordnungen die erste Stoffschicht (1) unter einem spitzen Winkel an jeder der ersten Faltlinien (4a, 4b, 4c) umgeschlagen und dann, wieder unter einem spitzen Winkel, in die entgegengesetzte Richtung umgelegt ist, wobei als Ergebnis eine erste obere Stoffschicht (5) gebildet ist, die über dem Paar erster Faltlinien (4a, 4b, 4c) liegt und so eine Omega-Falte bildet.

2. Airbag (12) nach Anspruch 1, wobei ein Teil der Stofflänge zwischen jedem Paar erster Faltlinien (4a, 4b, 4c) eine obere Stoffschicht (5) bereitstellt und wobei zumindest ein Teil der oberen Schicht (5) mit einem weiteren Bereich der ersten Stoffschicht (1) verbunden ist.

3. Airbag (12) nach Anspruch 2, wobei ein Rand der oberen Stoffschicht (5) mit dem unmittelbar darunterliegenden Bereich der ersten Stoffschicht (1) verbunden ist.

4. Airbag (12) nach einem vorhergehenden Anspruch, wobei ein Teil der Stofflänge zwischen dem oder jedem Paar zweiter Faltlinien (8) eine obere Stoffschicht (9) bereitstellt und wobei zumindest ein Teil der oberen Schicht (9) mit einem weiteren Bereich der ersten Stoffschicht (1) verbunden ist.

5. Airbag (12) nach Anspruch 4, wobei ein Rand der oberen Stoffschicht (9), die von der zweiten Faltanordnung gebildet wird, mit dem unmittelbar darunterliegenden Bereich der ersten Stoffschicht (1) verbunden ist.

6. Airbag (12) nach einem vorhergehenden Anspruch, wobei die oder jede zweite Faltanordnung eine Tasche oder Kammer bildet, die an ihren Enden zumindest im Wesentlichen verschlossen ist.

7. Airbag (12) nach einem vorhergehenden Anspruch, wobei die Schnittstelle von jeder ersten Faltanordnung mit der oder jeder zweiten Faltanordnung eine füllbare Ausbuchtung bildet, wobei Seitenflächen der Ausbuchtung vorrangig von Stoffbereichen gebildet sind, die zwischen einem Paar erster Faltlinien (4a, 4b, 4c) verlaufen, und Endflächen der Ausbuchtung vorrangig von Stoffbereichen gebildet sind, die zwischen einem Paar von zweiten Faltlinien (8) verlaufen.

8. Airbagmodul, in dem ein Airbag (12) nach einem der vorhergehenden Ansprüche aufgenommen ist.

9. Verfahren zum Formen eines Airbags (12), das folgende Schritte umfasst:
Formen von zwei oder mehreren ersten Faltanordnungen in einer Stoffschicht (1), wobei jede erste Faltanordnung ein Paar Falten des Stoffs entlang von im Wesentlichen parallelen ersten Faltlinien (4a, 4b, 4c) umfasst, sodass die Stofflänge zwischen den ersten Faltlinien (4a, 4b, 4c) deutlich länger ist als der Abstand zwischen den ersten Faltlinien (4a, 4b, 4c), wobei jede erste Faltanordnung eine Tasche oder Kammer bildet, die an ihren Enden im Wesentlichen verschlossen ist;
Formen von mindestens einer zweiten Faltanordnung in der Schicht (1), wobei die oder jede zweite Faltanordnung ein Paar Falten des Stoffs entlang von im Wesentlichen parallelen zweiten Faltlinien (8) umfasst, wobei die zweiten Faltlinien (8) quer über die ersten Faltlinien (4a, 4b, 4c) und im Wesentlichen senkrecht dazu verlaufen, sodass die Stofflänge zwischen den zweiten Faltlinien (8) deutlich länger ist als der Abstand zwischen den zweiten Faltlinien (8),
**dadurch gekennzeichnet, dass** an dem Paar erster Faltlinien (4a, 4b, 4c) in jeder der ersten Faltanordnungen die erste Stoffschicht (1) unter einem spitzen Winkel an jeder der ersten Faltlinien (4a, 4b, 4c) umgeschlagen und dann, wieder unter einem spitzen Winkel, in die entgegengesetzte Richtung umgelegt wird, wobei als Ergebnis eine erste obere Stoffschicht (5) gebildet wird, die über dem Paar erster Faltlinien (4a, 4b, 4c) liegt und so eine Omega-Falte bildet.

10. Verfahren nach Anspruch 9, das ferner den Schritt des Integrierens der Stoffschicht (1) zu einem im Wesentlichen geschlossenen Airbag-Luftsack (12) umfasst.

## Revendications

1. Airbag (12) comportant une surface formée à partir d'une première couche de tissu (1), la première couche de tissu (1) comportant deux premiers agencements de pliage ou plus formés dans celle-ci, chaque premier agencement de pliage comprenant une paire de plis du tissu le long de premières lignes de pliage (4a, 4b, 4c) essentiellement parallèles, de sorte que la longueur de tissu entre les premières lignes de pliage (4a, 4b, 4c) est sensiblement supérieure à la distance entre les premières lignes de pliage (4a, 4b, 4c), chaque premier agencement de pliage formant une poche ou un compartiment qui est essentiellement fermé(e) à ses extrémités, la première couche de tissu (1) comportant au moins un second agencement de pliage formé dans celle-ci, le ou chaque second agencement de pliage comprenant une paire de plis du tissu le long de secondes lignes de pliage (8) essentiellement parallèles, les secondes lignes de pliage (8) croisant les premières lignes de pliage (4a, 4b, 4c) et étant essentiellement perpendiculaires à celles-ci, de sorte que la longueur de tissu entre les secondes lignes de pliage (8) est sensiblement supérieure à la distance entre les secondes lignes de pliage (8), **caractérisé en ce que,** au niveau de la paire de premières lignes de pliage (4a, 4b, 4c) dans chacun des premiers agencements de pliage, la première couche de tissu (1) est pliée sur elle-même selon un angle aigu sur chacune des premières lignes de pliage (4a, 4b, 4c), et est ensuite repliée dans la direction opposée, de nouveau selon un angle aigu, le résultat étant de former une première couche supérieure (5) de tissu qui recouvre la paire de premières lignes de pliage (4a, 4b, 4c), formant ainsi un pli en oméga.

2. Airbag (12) selon la revendication 1, dans lequel une partie de la longueur de tissu entre chaque paire de premières lignes de pliage (4a, 4b, 4c) fournit une couche supérieure de tissu (5), et dans lequel au moins une partie de la couche supérieure (5) est reliée à une autre zone de la première couche de tissu (1).

3. Airbag (12) selon la revendication 2, dans lequel un bord de la couche supérieure de tissu (5) est relié à la zone de la première couche de tissu (1) se trouvant directement dessous.

4. Airbag (12) selon une quelconque revendication précédente, dans lequel une partie de la longueur de tissu entre la ou chaque paire de secondes lignes de pliage (8) fournit une couche supérieure de tissu (9), et dans lequel au moins une partie de la couche supérieure (9) est reliée à une autre zone de la première couche de tissu (1).

5. Airbag (12) selon la revendication 4, dans lequel un bord de la couche supérieure de tissu (9) formée par le second agencement de pliage est relié à la zone de la première couche de tissu (1) se trouvant directement dessous.

6. Airbag (12) selon une quelconque revendication précédente, dans lequel le ou chaque second agencement de pliage forme une poche ou un compartiment qui est au moins essentiellement fermé(e) à ses extrémités.

7. Airbag (12) selon une quelconque revendication précédente, dans lequel l'intersection entre chaque premier agencement de pliage et le ou chaque second agencement de pliage forme une saillie gonflable, des surfaces latérales de la saillie étant formées principalement par des zones de tissu s'étendant entre une paire de premières lignes de pliage (4a, 4b, 4c), et des surfaces d'extrémité de la saillie étant formées principalement par des zones de tissu s'étendant entre une paire de secondes lignes de pliage (8).

8. Module d'airbag dans lequel est intégré un airbag (12) selon l'une quelconque des revendications précédentes.

9. Procédé de formation d'un airbag (12), comprenant les étapes consistant à :
former deux premiers agencements de pliage ou plus dans une couche de tissu (1), chaque premier agencement de pliage comprenant une paire de plis du tissu le long de premières lignes de pliage (4a, 4b, 4c) essentiellement parallèles, de sorte que la longueur de tissu entre les premières lignes de pliage (4a, 4b, 4c) est sensiblement supérieure à la distance entre les premières lignes de pliage (4a, 4b, 4c), chaque premier agencement de pliage formant une poche ou un compartiment qui est essentiellement fermé(e) à ses extrémités ;
former au moins un second agencement de pliage dans la couche (1), le ou chaque second agencement de pliage comprenant une paire de plis du tissu le long de secondes lignes de pliage (8) essentiellement parallèles, les secondes lignes de pliage (8) croisant les premières lignes de pliage (4a, 4b, 4c) et étant essentiellement perpendiculaires à celles-ci, de sorte que la longueur de tissu entre les secondes lignes de pliage (8) est sensiblement supérieure à la distance entre les secondes lignes de pliage (8),
**caractérisé en ce que,** au niveau de la paire de premières lignes de pliage (4a, 4b, 4c) dans chacun des premiers agencements de pliage, la première couche de tissu (1) est pliée sur elle-même selon un angle aigu sur chacune des premières lignes de pliage (4a, 4b, 4c), et est ensuite repliée dans la direction opposée, de nouveau selon un angle aigu, le résultat étant de former une première couche supérieure (5) de tissu qui recouvre la paire de premières lignes de pliage (4a, 4b, 4c), formant ainsi un pli en oméga.

10. Procédé selon la revendication 9, comprenant en outre l'étape consistant à intégrer la couche de tissu (1) dans un coussin d'airbag (12) essentiellement enfermé.
